# EUROPEAN PATENT APPLICATION

(11) **EP 2 733 687 A1**
(43) Date of publication of application: **21.05.2014**
(21) Application number: 12812107.6
(22) Date of filing: 10.07.2012
(51) Int. Cl.: G08G 1/09, B60L 3/00, G01C 21/26

(54) **VEHICLE INFORMATION PROVISION DEVICE AND VEHICLE INFORMATION ADMINISTRATION SYSTEM**

(30) Priority: 12.07.2011 JP 2011153792; 26.06.2012 JP 2012142855
(71) Applicant: Nissan Motor Co., Ltd, Yokohama-shi, Kanagawa 221-0023 (JP)
(72) Inventor: MIYAZAKI, Yasuhito, Atsugi-shi, Kanagawa 243-0123 (JP)
(74) Representative: Hoefer & Partner
(86) International application number: PCT/JP2012/067556
(87) International publication number: WO 2013/008806

(57) **Abstract**

There are provided a vehicle-to-vehicle communication means to transmit and receive vehicle information by wireless communication with another vehicle, a memory to store vehicle information of a host vehicle and vehicle information of the other vehicle received by the vehicle-to-vehicle communication means, and a server communication means to transmit the vehicle information of the host vehicle and the vehicle information of the other vehicle stored in the memory, to a server. Therefore, the vehicle information of a vehicle can be transmitted even when the vehicle is outside the communication zone of communication with the server.

## Description

### TECHNICAL FIELD

The present invention relates to vehicle information provision or providing apparatus or device and vehicle information management or administration system.

### BACKGROUND ART

There is a known method of providing information about battery service stations for electric vehicles (Patent Document 1). This method includes determining the state of a battery of the vehicle on the vehicle's side, determining a geographic location of the vehicle, identifying at least one battery service station that can be reached by the vehicle on the basis of the charge state of the battery and the geographic location of the vehicle, notifying the user of the vehicle, of a user of at least one battery service station, periodically transmitting the state of the battery through a data network to a service provider, and periodically receiving a state of the battery service station, through the data network from the service provider.

However, in the system transmitting and receiving information through the data network by wireless or radio communication with the service provider, information about a vehicle cannot be transmitted to the service provider when the vehicle is outside the radio communication zone.

### PRIOR ART DOCUMENT(S)

### Patent Document

Patent Document 1: JP 2010-540907 A

### SUMMARY OF THE INVENTION

A task or object of the present invention is to provide vehicle information providing apparatus and vehicle information management system suitable for transmitting vehicle information of a vehicle even when the vehicle is outside a communication zone for communication with a server.

According to the present invention, the above-mentioned problem is solved by providing a vehicle-to-vehicle communication means or device to transmit and receive vehicle information by wireless or radio communication to and from another vehicle; and a server communication means or device to transmit the vehicle information of a host vehicle and the vehicle information of the other vehicle, to a server.

According to the present invention, the host or first vehicle receives vehicle information of the other or second vehicle located outside the communication zone of communication with the server, and transmits the information to the server when the host vehicle is located inside the communication zone of communication with the server. Therefore, the apparatus can supply vehicle information of another vehicle to the server even when the other vehicle is outside the server communication zone.

### BRIEF DESCRIPTION OF THE DRAWINGS

FIG. 1 is a block diagram of an information providing system including a vehicle information providing apparatus according to one embodiment of the present invention.
FIG. 2 is a block diagram of a vehicle, a server and charge apparatus incorporated in the information providing system of FIG. 1.
FIG. 3 is a concept view showing data stored in a database shown in FIG. 1.
FIG. 4 is a concept view for illustrating vehicle-to-vehicle communication among vehicles shown in FIG. 1.
FIG. 5 is a concept view for illustrating the vehicle-to-vehicle communication among vehicles shown in FIG. 1 and server communication between vehicles and server.
FIG. 6 is a concept view of data recorded in a database of a server in an information providing system including vehicle information providing apparatus according to another embodiment of the present invention.
FIG. 7 is a concept view of a server log contained in the data of FIG. 6.
FIG. 8 is a concept view of data stored in a memory of a vehicle A in the information providing system including the vehicle information providing apparatus according to the another embodiment.
FIG. 9 is a graph showing data of FIG. 6 for each vehicle ID in the chronological form.
FIG. 10 is a graph showing data of FIG. 8 for each vehicle ID in the chronological form.
FIG. 11 is a graphic view showing data recorded in the database of the server and data recorded in the memory of the vehicle A before data transmission and reception between the server and the vehicle A, for the vehicle ID (0002).
FIG. 12 is a graphic view similar to FIG. 11, but showing data after the data transmission and reception between the server and the vehicle A.
FIG. 13 is a graphic view showing data recorded in the memory of the vehicle A and data recorded in the memory of the vehicle B before data transmission and reception between the vehicle A and the vehicle B, for the vehicle ID (XXXX).
FIG. 14 is a graphic view similar to FIG. 13, but showing data after the data transmission and reception between the vehicle A and the vehicle B.
FIG. 15 is a flowchart showing a control process of a control section of vehicle A in the information providing system including the vehicle information providing apparatus according to the another embodiment.
FIG. 16 is a flowchart showing a control process at a step S3 shown in FIG. 15.
FIG. 17 is a flowchart showing a control process at a step S5 shown in FIG. 15.

### MODE(S) FOR CARRYING OUT THE INVENTION

Following is explanation on embodiments of the present invention with reference to drawings.

### «FIRST EMBODIMENT»

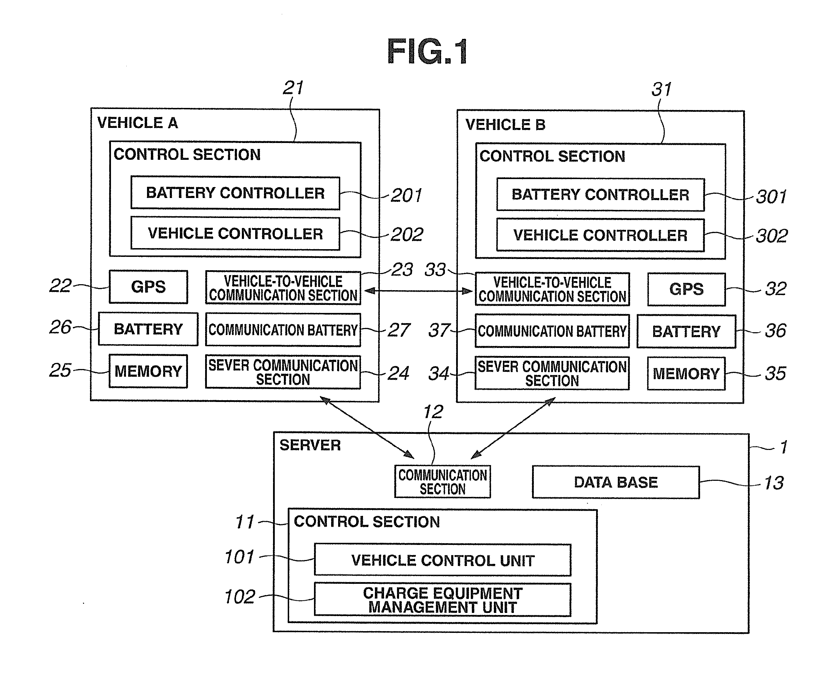

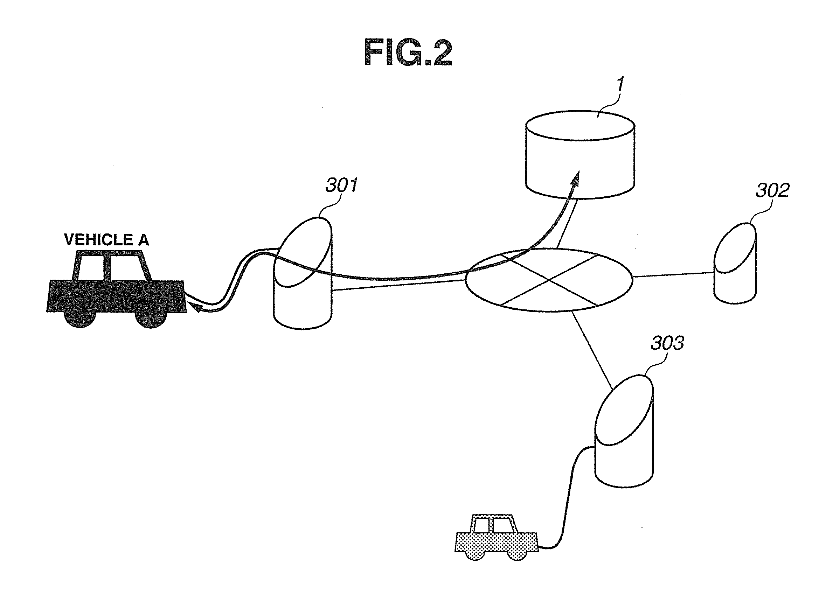

FIG. 1 is a block diagram of an information providing system including a vehicle information providing apparatus according to one embodiment of the present invention. FIG. 2 is a block diagram of a vehicle including the information providing apparatus of this example, a server and charge apparatus. The vehicle information providing apparatus of this example is apparatus to be installed in a vehicle such as an electric vehicle or a plug-in hybrid vehicle. Although the information providing apparatus of this example is incorporated in an electric vehicle in the example of the following explanation, it is possible to incorporate the information providing apparatus of this example in a vehicle other than the electric vehicle.

As shown in FIG. 1, the vehicle information providing system of this example includes a server 1, and vehicles A and B. Server 1 includes a control section 11, a communication section 12 and a data base 13.

The control section 11 of server 1 includes a vehicle control unit 101 and a charge control management unit 102. Control section 11 controls the communication section 12, and manages the vehicle information of each vehicle received by communication section 12, with vehicle control unit 101. Vehicle control unit 101 is a management section managing a plurality of vehicle conditions or states to be managed, such as charge state or condition (SOC) of a battery mounted on each of vehicle A and vehicle B, position information of vehicle A and vehicle B, and driving tendencies of vehicle A and vehicle B, from the vehicle information received by communication section 12.

Vehicle control unit 101 calculates the charge state or condition of battery 26 of vehicle A from voltage, current or temperature of battery 26 contained in the battery information among the vehicle information transmitted from vehicle A. For example, since there is a correlation between the voltage of battery 26 and the SOC of battery 26, a map representing the correlation is preliminarily stored in vehicle control unit 101, and the vehicle control unit 101 can calculate the charging state of battery 26 from the voltage of battery 26 of vehicle A by examining the map. The battery information is transmitted periodically from vehicle A to server 1, and the battery information is managed by server 1. Therefore, it is possible to accurately detect a sign or symptom of abnormality being produced in the battery. As to the battery 36 of vehicle B, like vehicle A, the battery information is managed by battery control unit 101. Thus, server 1 manages the states of batteries 26 and 36 of vehicle A and vehicle B.

Moreover, vehicle control unit 101 can calculate the states of batteries 26 and 36 of vehicles A and B in accordance with starting times of vehicles A and B or travel distances or mileages of vehicle A and B. Vehicle control unit 101 estimates consumptions of batteries 26 and 36 from time differences between the current time and the starting time, of vehicles A and B included in the drive information of vehicle A among the vehicle information of vehicles A and B received by communication section 102, and calculates the states of batteries 26 and 36 of vehicles A and B from the estimated consumptions. Moreover, vehicle control unit 101 estimates consumptions of batteries 26 and 36 from the travel distances included in the drive information of vehicles A and B, and calculates the states@ of batteries 26 and 36 of vehicles A and B from the estimated consumptions. It is optional to calculate the travel distances of vehicles A and B on the server's side from the position information of vehicles A and B.

In the case of management of position information of vehicle A, the vehicle control unit 101 grasps the driving situation of the vehicle and specifies or determines the current position of vehicle A, from the position of the vehicle, the vehicle speed etc. included in the vehicle information transmitted from vehicle A. The position information of vehicle B is also specified by vehicle control unit 101 in the same manner as the vehicle A.

In the case of management of the driving tendencies of vehicles A and B, the vehicle control unit 101 discriminates the driving tendency of each of users of vehicles A and B, from the driving information of vehicles A and B transmitted from vehicles A and B. From the vehicle driving information including the positions and vehicle speeds of vehicles A and B and road data managed by control section 11, the vehicle control unit 101 measures variation of the vehicle speed of each of vehicles A and B in a predetermined road, and specifies or judges that, for example, the user of vehicle A has a driving tendency to perform hard acceleration and hard braking frequently and the user of vehicle B has a driving tendency not to perform hard acceleration and hard braking frequently. Since the consumption of the vehicle battery is increased by frequent hard acceleration and hard deceleration, the vehicle control unit 101 can manage the states of the batteries of vehicles A and B from the driving tendencies and the consumed conditions of the batteries.

The charge equipment management unit 102 is a control unit to manage charge equipment unit(s) or charge station(s) located at places, such as parking areas of highways or expressways and shopping centers, where many vehicles are parked. The charge equipment management unit 102 manages not only the positions of the charge equipment units or charge stations, but also the operating conditions of the charge stations and charge termination times, as server management information. As shown in FIG. 2, server 1 and charge stations 301∼303 are connected via the Internet, and thereby configured to form a network. When vehicle A is connected through a charging cable, with charge station 301, the vehicle A and center 1 are set in a state in which information can be transmitted and received therebetween through the charging cable and the Internet. Vehicle A uploads data such as the vehicle information accumulated in memory 25, to server 1. On the other hand, server 1 transmits, to vehicle A, identification information (ID) of vehicle A and other vehicles and server management information corresponding to the vehicles, accumulated in database 13.

Each of the charge stations 301∼303 periodically transmits information on the operating condition of the charge station, to the charge equipment management unit 102 of server 1. The operating condition of the charge station includes a charge start time and a charge end time of a vehicle receiving electric energy, and a number of vehicles waiting for charging. Thus, the charge equipment management unit 102 manages the conditions of charge stations 301∼303.

Reverting to FIG. 1, the control section 11 can transmit information on an appropriate charging place in accordance with the charge states of vehicle A, B, from the vehicle information managed by the vehicle control unit 101 and information on the charge stations managed by charge equipment management unit 102 because, as mentioned before, the control section 11 controls the charge states of the vehicles with vehicle control unit 101, and the locations and operating conditions of the charge stations with charge equipment management unit 102. When, for example, vehicle control unit 101 detects, from the vehicle information, that the SOC of vehicle B is about 40%, and charge equipment management unit 102 detects, from the server management information, that the charge station on the travel route to the destination of vehicle B is being used to charge another vehicle, then the control unit 11 transmits the locations of charging stations around the current position of vehicle B so as to prompt early charging, to the user of vehicle B. When, for example, vehicle control unit 101 detects, from the vehicle information, that the SOC of vehicle A is about 50%, and the user of vehicle A has a driving tendency consuming the battery hard with frequent rapid starting and hard acceleration, then the control unit 11 checks the locations of charge stations around the current position of vehicle A, from the server management information and transmits the locations of the charge stations to vehicle A. Thus, control section 11 transmits information about charging to the users of vehicles A and B by utilizing the vehicle information of vehicles A and B received by communication section 12, and the server management information managed by the server's side.

Communication section 12 is controlled by control section 11, and configured to transmit and receive data wirelessly through relay stations provided, respectively, in vehicle running areas, to vehicles in the areas. The relay stations are disposed in the roofs of buildings and apartment housings, poles for electricity and traffic signals. Each relay station performs communication with vehicles A and B in a predetermined area around the location of the relay station. Therefore, when vehicle A, B is outside the communication area of one relay station, the communication section 12 is unable to communicate, through that relay station, with vehicle A, B. Moreover, even inside the communication area of the relay station, if vehicle A, B is traveling inside a tunnel, in a mountain region, or in places where the receiver sensitivity of radio waves is low because of obstacles, the communication section 12 is unable to communicate with vehicle A, B.

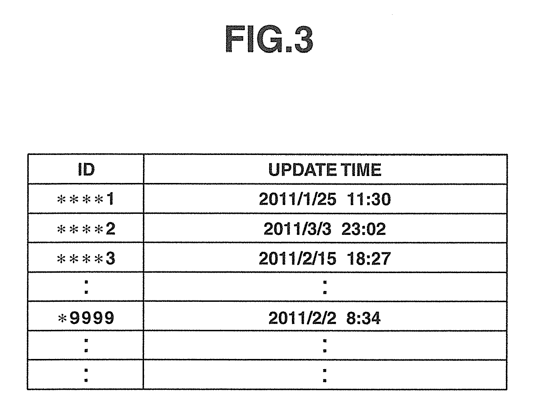

Database 13 is a database to save vehicle information transmitted from each vehicle, in a form organized for each of vehicles. FIG. 3 is a concept view for illustrating data stored in database 13. As shown in FIG. 3, a data set saved in database 13 includes identification information (ID) for discriminating the vehicle and the update time which is a time point at which the data is updated. The identification information items are assigned, respectively, to vehicles. For example, ****1 is assigned to vehicle A, and ****2 is assigned to vehicle B. The instant at which the data is received by communication section 12 is stored as the update time. In the example shown in FIG. 3 as an example, the vehicle information about vehicle A has been received and updated at eleven thirty on January 25, 2011. The update time may be a time at which the data is rewritten.

As mentioned later, the communication between vehicle A and communication section 12 is used to transmit not only the vehicle information of vehicle A, but also the vehicle information of vehicle B and other vehicles. Accordingly, control section 11 updates database 13 in accordance with the received vehicle information. When, for example, the communication section 12 has received the vehicle information of vehicle A and the vehicle information of vehicle B by the communication with vehicle A, the control section 11 updates the data in the region of ID (****1) corresponding to the data region of vehicle A and the data in the region of ID (****2) corresponding to the data region of vehicle B, and rewrites the respective update time to the reception time of reception of the vehicle information.

Reverting to FIG. 1, vehicle A includes control section 21, GPS section 22, vehicle-to-vehicle communication section 23, server communication section 24, memory 25, battery 26 and communication battery 27. Vehicle B includes control section 31, GPS section 32, vehicle-to-vehicle communication section 33, server communication section 34, memory 35, battery 36 and communication battery 37. Since the control section 31, GPS section 32, vehicle-to-vehicle communication section 33, server communication section 34, memory 35, battery 36 and communication battery 37 are identical in construction to the control section 21, GPS section 22, vehicle-to-vehicle communication section 23, server communication section 24, memory 25, battery 26 and communication battery 27, repetitive explanation is omitted in the following explanation.

Control section 21 includes a battery controller 201 and a vehicle controller 202, and control section 31 includes a battery controller 301 and a vehicle controller 302. Controller 21 is a controller for controlling the whole of the vehicle. Controller 21 controls GPS section 22, vehicle-to-vehicle communication section 23, server communication section 24, memory 25, battery 26 and communication battery 27. Battery controller 201 manages, as the battery information of vehicle A, voltage, current, temperature data or the charge state (SOC) of battery 26, from sensed values of a voltage sensor (not shown) connected with battery 26, a current sensor (not shown) connected with battery 26 and a temperature sensor (not shown) for sensing the temperature of battery 26. Vehicle controller 202 manages, as the vehicle driving information of vehicle A, the vehicle speed of vehicle A obtained from a vehicle speed sensor (not shown). Furthermore, vehicle controller 202 obtains information on the position of vehicle A from GPS section 22, and manages, as the vehicle driving information, the starting time and the travel distance or mileage of vehicle A from the running record or driving log of vehicle A. With this configuration, the control section 21 manages the vehicle information including the battery information of battery 26 and the vehicle driving information of vehicle A.

GPS section 22 receives radio waves, through a GPS antenna (not shown), from a positioning satellite, and thereby obtains the current position of vehicle A. During movement of vehicle A, GPS section 22 delivers, to control section 21, information on the movement including the travel direction and the speed.

Vehicle-to-vehicle communication section 23 is a piece of telecommunication equipment for transmitting and receiving information with remote vehicles or other vehicles including vehicle B. In the case of communication with vehicle B, the vehicle-to-vehicle communication section 23 establishes a communication link with vehicle-to-vehicle communication section 33, and exchanges information. By controlling vehicle-to-vehicle communication section 23, the control section 21 transmits, to vehicle-to-vehicle communication section 33, the vehicle information of vehicle A, and the vehicle information, stored in memory 25, of the remote vehicles or other vehicles. Furthermore, control section 21 receives, from vehicle-to-vehicle communication section 33, the vehicle information of vehicle B, and the vehicle information, stored in memory 35, of remote vehicles or other vehicles.

Server communication section 24 is a communicating section for communicating with communication section 12 wirelessly. Server communication section 24 transmits the vehicle information of vehicle A and the vehicle information of the other vehicles stored in memory 25, to server 1. When the transmission is finished, the control section 21 deletes the vehicle information of the other vehicles stored in memory 25. Furthermore, server communication section 24 receives a signal from communication section 12 and receives server management information of vehicle A and other vehicles. The communication range or distance allowing the communication between vehicle-to-vehicle communication section 23 and vehicle-to-vehicle communication section 33 is shorter than the communication range or distance allowing the communication between server communication section 24 and communication section 12 and shorter than the communication range or distance allowing the communication between server communication section 34 and communication section 12. Therefore, the vehicle-to-vehicle communication section 23 and vehicle-to-vehicle communication section 33 are designed to employ communication device and communication mode suitable for short range communication, and the server communication sections 24 and 34 and communication section 12 are designed to employ communication device and communication mode suitable for long range communication. With this configuration, if there are no other vehicles around vehicle A in the communication area with server 1, for example, then vehicle A is unable to communication with other vehicles but vehicle A can communicate with server 1. If, for example, vehicle A is unable to communicate with server 1 in a tunnel and another vehicle is traveling in the same tunnel, then vehicle A can transmit and receive vehicle information with the vehicle in the tunnel.

Memory 25 includes recording medium for storing the vehicle information of vehicle A managed by control section 21 and the vehicle information of vehicle A and other vehicles received by vehicle-to-vehicle communication section 23 and server communication section 24, in a form associating information items with the vehicles. In memory 25, there are stored identification information (ID) for discriminating vehicles and update times of updating data, as in database 13. When, for example, the vehicle information of vehicle B is received by vehicle-to-vehicle communication section 23 in the state in which the vehicle information of vehicle A and the vehicle information of vehicle B are already stored in memory 25, then control section 21 recognizes the received vehicle information as the vehicle information of vehicle B, from the identification information attached to the received vehicle information, and records the received vehicle information in a memory region in memory 25 corresponding to the identification information. Moreover, at the time of recording the vehicle information, a communication log of vehicle-to-vehicle communication section 23 is stored, as the update time, in memory 25.

When vehicle information and corresponding server management information of server 1 are received from vehicle-to-vehicle communication section 23 and server communication section 24, the control section 21 stores the received information in the memory in the form associating the ID of the received vehicle information and the ID contained in the server management information. If, for example, as the vehicle information of vehicle B, the data indicating a low charge state, the current position of vehicle B, and a travel route, and as the server management information of server 1 relating to that vehicle information, the data representing the location(s) of charge station or stations on the travel route of vehicle B, and waiting time are received, the control section 21 stores the received vehicle information of vehicle B and the received server management information in the record region of the ID indicating vehicle B, in memory 25.

Moreover, memory 25 has a preset recordable limit capacity, so that it is not possible to record information beyond the recordable limit capacity. Therefore, control section 21 deletes vehicle information having an older update time by checking the update time when the total data quantity of the vehicle information already recorded in memory 25, and the vehicle information and server management information received newly by vehicle-to-vehicle communication section 23 and server communication section 24 is greater than the recordable limit capacity, that is, when new information cannot be stored in memory 25 because of the data quantity exceeding the limit capacity. Thus, control section 21 can increase a free space in memory 25, and record more recent vehicle information in memory 25.

Battery 26 is made up of secondary battery or batteries. Battery 26 is a driving source of vehicle A, and is connected with a motor (not shown) for driving vehicle A. Battery 26 is adapted to be charged from an external power source such as the above-mentioned charge stations through a charge port (not shown) provided in vehicle A. Communication battery 27 is a battery for enabling communication by server communication section 24 even in a state in which vehicle A is stopped. Communication battery 27 is made up of secondary battery or batteries, and arranged to supply electric power to server communication section 24 at least in the stop state of vehicle A.

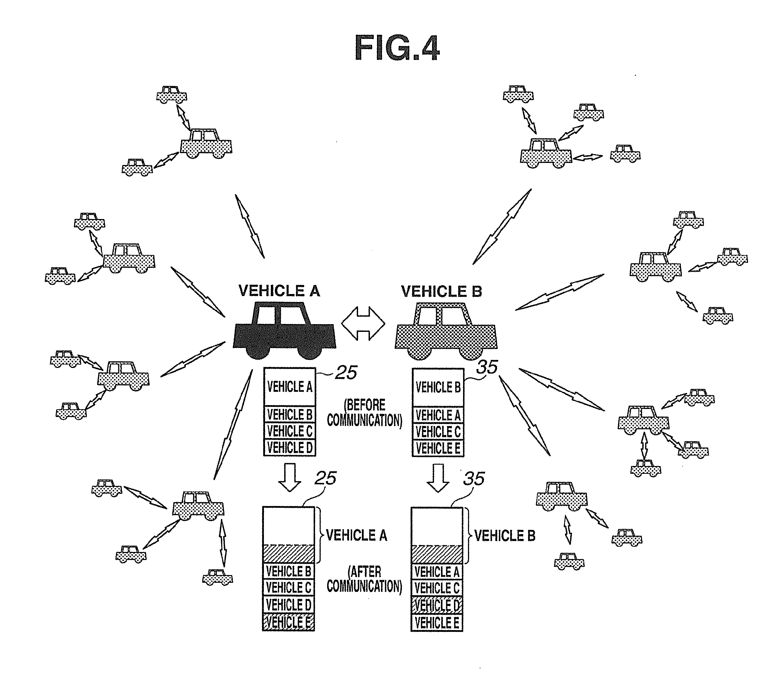

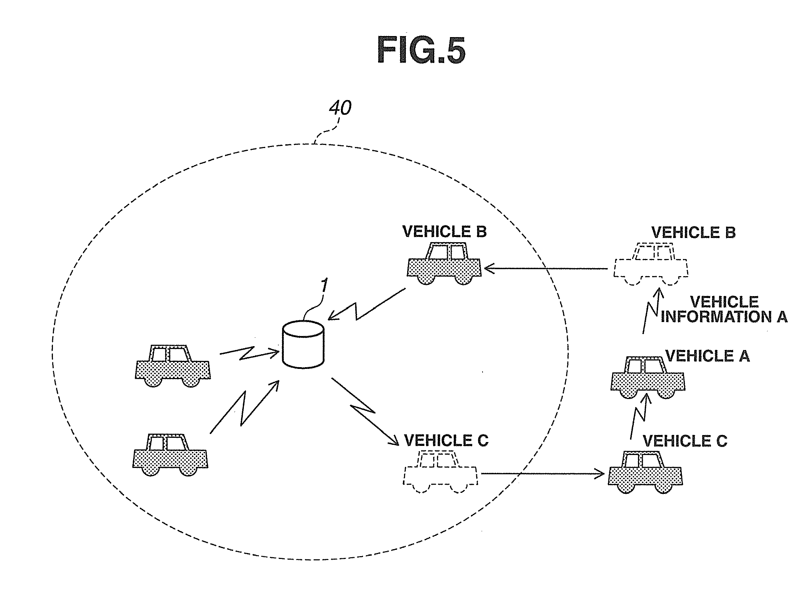

Next, FIGS. 4 and 5 are used for explaining communication control among vehicles including vehicles A and B, and communication control between each vehicle and server 1. FIG. 4 is a concept view for illustrating vehicle-to-vehicle communication. FIG. 5 is a concept view for illustrating the vehicle-to-vehicle communication and server communication.

As shown in FIG. 4, vehicles A and B transmit and receive vehicle information to and from other vehicles, respectively with vehicle-to-vehicle communication sections 23 and 33, and store information in memory 25 and 35, respectively. The other vehicles which are communication partners of vehicles A and B, transmit and receive vehicle information with surrounding vehicles and store information in respective memories, in the same manner. Thus, the host vehicle which is the vehicle equipped with the vehicle information providing apparatus according to this embodiment retains the vehicle information of the host vehicle itself but also the vehicle information of remote vehicles which are vehicles other than the host vehicle.

In the operation of vehicle-to-vehicle communication between vehicles A and B, the control section 21 analyzes the vehicle information transmitted from vehicle B; collates the received vehicle information with the vehicle information stored in memory 25 in terms of ID, update time instant, and data contents; and performs operations to update the date in memory 25, save new data and delete record data in relation to each vehicle. Concretely, control section 21 updates the date when the type of the data of the received vehicle information is the same and the update time instant is new or more recent. Moreover, when the ID saved in the memory and the ID contained in the vehicle information are identical to each other, but the received information is different in the type of information, from the vehicle information in the memory, the control section 21 records the received new vehicle information in memory 25. When the ID saved in the memory and the ID contained in the received vehicle information are not identical to each other, the control section 21 produces a new record region in memory 25, and stores the vehicle information.

In the example shown in FIG. 4, in the state before the communication between vehicles A and B, the memory 25 of vehicle A holds the vehicle information of vehicle A∼D, and the memory 35 of vehicle B holds the vehicle information of vehicle A∼C and E. Moreover, in this example, the vehicle information of vehicle C contained in the memory of vehicle A and the vehicle information of vehicle C contained in the memory of vehicle B are identical in information contents and update time. Each of vehicles C∼E is equipped with a vehicle information providing apparatus similar to the vehicle information providing apparatus according to this embodiment.

In this situation, in the control of the vehicle A's side, control section 21 collates the vehicle information transmitted from vehicle B with the vehicle information in memory 25, and extracts new vehicle information of vehicle A and vehicle information of vehicle E whose ID is not yet recorded in memory 25. Then, control section 21 stores the extracted vehicle information in memory 25. On the other hand, among the invention information transmitted from vehicle B, the vehicle information of vehicle C is the same in data contents and update time as the vehicle information of vehicle C in memory 25. Therefore, control section 21 does not update the vehicle information of vehicle C.

In the control of the vehicle B's side, control section 31 collates the vehicle information transmitted from vehicle A with the vehicle information in memory 35, and extracts new vehicle information of vehicle B and vehicle information of vehicle D whose ID is not yet recorded in memory 35. Then, control section 31 stores the extracted vehicle information in memory 35. On the other hand, among the invention information transmitted from vehicle A, the vehicle information of vehicle C is the same in data contents and update time as the vehicle information of vehicle C in memory 35. Therefore, control section 31 does not update the vehicle information of vehicle C. Consequently, the vehicle information of vehicles A∼E is stored in memory 25 and memory 35. Thus, in this example, by the vehicle-to-vehicle communication, not only the vehicle information of the host vehicle but also the vehicle information of other vehicles are updated at each time of communication.

In the example of FIG. 4, explanation is made about the vehicle information of vehicle A∼F. However, when the server management information managed by server 1 is recorded in correspondence with the vehicle information of vehicles A∼F, the server management information is transmitted and received likewise by the vehicle-to-vehicle communication.

FIG. 5 is a view for illustrating the vehicle-to-vehicle communication and the server communication. An area 40 is an area in which the communication with server 1 is possible. Vehicles traveling inside the area can transmit and receive vehicle information with server 1. Vehicles traveling outside the area cannot transmit and receive vehicle information with server 1. As to vehicles B and C shown in FIG. 5, a broken line indicates the position of the vehicle at a time instant (t1) and a solid line indicates the position of the vehicle at a time instant (t2) later than time instant (t1). In other words, vehicle B was traveling outside the area 40 at instant (t1), but vehicle B is inside the area 40 at instant (t2). Vehicle C was traveling inside the area 40 at instant (t1), but vehicle C is outside the area 40 at instant (t2).

Control section 21 examines whether the communication with server 1 is feasible or not, by checking the strength of a signal received by server communication section 24; performs the server communication by controlling the server communication section 24 when the server communication is feasible; and performs the vehicle-to-vehicle communication by controlling vehicle-to-vehicle communication section 22 when the server communication is not feasible outside the area 40. Control section 31 performs control operations in the same manner.

At instant t1, vehicle A performs the vehicle-to-vehicle communication with nearby vehicle B, and transmits vehicle information A. Then, at instant t2, vehicle B enters area 40, changes the communication mode from the vehicle-to-vehicle communication to the server communication, communicates with server 1, and transmits, to server 1, the vehicle information of vehicle A in addition to the vehicle information of vehicle B. Therefore, the vehicle information of vehicle A can be accumulated in server 1 through vehicle B even when vehicle A is outside the area 40.

At instant t1, vehicle C is traveling inside the area 40, hence communicates with server 1, and stores, in the memory, the vehicle information of vehicle A and the server management information of server 1 corresponding to vehicle A stored at instant t1, in addition to the server management information about vehicle C. Then, at instant t2, vehicle C moves out of area 40, changes the communication mode from the server communication to the vehicle-to-vehicle communication, performs the communication with vehicle A, and transmits, to vehicle A, the vehicle information of vehicle A and the server management information corresponding to vehicle A, in addition to the vehicle information of vehicle C. Therefore, even when vehicle A is outside the area 40, the vehicle A can receive, through vehicle C, the vehicle information of vehicle A and server management information about vehicle A managed by server 1.

When a vehicle is inside the area 40 and in the state capable of communicating with server 1, the vehicle does not perform the vehicle-to-vehicle communication, but performs the communication with server 1. Since other vehicles inside the area 40 are communicating with server 1 likewise, the vehicles inside area 40 can share the vehicle information through server 1 like the vehicle-to-vehicle communication. Thus, inside the area 40 enabling the server communication, it is possible to reduce the communication data quantity by the vehicle-to-vehicle communication.

As mentioned above, in this example, there are provided a vehicle-to-vehicle communication section 23, 33 to transmit and receive vehicle information by wireless communication with another vehicle or a second vehicle, and a server communication section 24, 34 to transmit the vehicle information of a host vehicle or first vehicle and the vehicle information of the other or second vehicle, to a server 1. With this configuration, even if the other or second vehicle is outside the communication area of the server communication, the vehicle information of the other vehicle can be supplied through the host or first vehicle, to server 1, so that most recent or newest vehicle information can be accumulated in server 1. Furthermore, even if the host vehicle is outside the communication area of the server communication, another vehicle can transmit the vehicle information of the host vehicle to server 1 in place of the host vehicle, so that most recent vehicle information can be accumulated in server 1. Furthermore, even in the case in which the host vehicle is in the state unable to communicate with server 1, for a long time, the vehicle information of the host vehicle can be transmitted to server 1 if one of other vehicles sharing the vehicle information of the host vehicle comes into the state capable of communicating with server 1. Therefore, the vehicle information can be supplied to server 1 shortly while the host vehicle is unable to communicate with server 1 for a long time. As a result, this system can transmit adequate information to server 1 without being influenced by the number and locations of relay stations.

Furthermore, in this example, the vehicle information includes at least one of voltage, current and temperature of the battery 26, 36. Therefore, in this example, even if the host vehicle is outside the communication area of the server communication, the battery information of the host vehicle can be transmitted to server 1 by another vehicle in substitution for the host vehicle, so that most recent battery information can be accumulated in server 1. Therefore, the system can securely detect indication of abnormality being produced in the battery.

Moreover, in this example, the vehicle information includes at least one of information of vehicle(s), starting time instant(s) of the vehicle(s) and travel distance(s) of the vehicle(s). Therefore, in this example, even if the host vehicle is outside the communication area of the server communication, the vehicle driving information of the host vehicle can be transmitted to server 1 by another vehicle in substitution for the host vehicle, so that most recent vehicle driving information can be accumulated in server 1. Therefore, the system can specify or determine driving tendency of vehicle(s) accurately.

Moreover, in this example, server management information managed by server 1 is received by server communication section 24, 34. Therefore, server 1 can obtain server management information including information such as the position(s) of charge station(s) corresponding to most recent vehicle information, and transmit the server management information to vehicle(s). Accordingly, even if the host vehicle is outside the communication area of server 1, the server can transmit information helpful to the user of the host vehicle. As a result, server 1 can collect and transmit adequate information to user(s) of vehicle(s) without being influenced by the number and locations of relay stations.

Moreover, in this example, information on positions of charge stations for battery 26, 36 is managed by server 1 as server management information. The server can collects information about the positions of charge stations suitable for the most recent vehicle information, and transmit the information to vehicles. Accordingly, even if the host vehicle is outside the communication area of server 1, the server can transmit information helpful to the user of the host vehicle.

In this example, server communication section 24, 34 communicates with server 1 when the vehicle enters the service area 40 of relay station(s) for communication with server 1. Accordingly, when vehicle(s) is inside the region enabling the server communication, the server communication can be performed instead of the vehicle-to-vehicle communication. Therefore, data can be accumulated in server 1 instead of transmitting and receiving a great amount of data among vehicles, so that it is possible to reduce the quantity of data in the vehicle-to-vehicle communication.

Moreover, in this example, the communication with server 1 is performed through a network of charge apparatus to charge a battery 26, 36. Therefore, vehicle information can be transmitted to serve 1 during a charge operation of charging the battery 26, 36, so that most recent vehicle information can be accumulated in server 1.

Moreover, in this example, there is provided a communication battery 27, 37 to enable the server communication with the server 1. Accordingly, the server communication with server 1 is feasible even while the vehicle is at rest for a long time for parking, and therefore, most recent vehicle information can be accumulated in server 1.

Moreover, in this example, the control section 21 may be configured not to store newly received vehicle information in memory 25 when a total data quantity of vehicle information already stored in memory 25 and information newly received by the vehicle-to-vehicle communication section 23 or server communication section 24 is greater than a recordable limit capacity of the memory.

Communication battery 27 may be arranged to supply electric power to vehicle-to-vehicle communication section 23 as well as server communication section 24 during stoppage of vehicle A, and thereby to set the vehicle-to-vehicle communication section 23 in the enabled state capable of communication.

The vehicle-to-vehicle communication section 23, 33 corresponds to "vehicle-to-vehicle communication means", the server communication section 24, 34 corresponds to "server communication means", and the control section 21, 22 corresponds to "control means".

### «SECOND EMBODIMENT»

The information providing system including vehicle information providing apparatus according to another embodiment of the present invention is different in part of the control from the information providing system according to the first embodiment. The construction of the information providing system according to this example is the same as the construction of the information providing system according to the first embodiment, so that the description about the first embodiment is used suitably for the explanation of the second embodiment.

Server 1 is a management system managing the states of battery 26, 36 of each vehicle, and the states of vehicles, as a whole. Server 1 manages the states of all the vehicles equipped with the system according to this embodiment and the states of the batteries of these vehicles. Moreover, server 1 manages information by the use of identification information (ID) identifying the vehicles equipped with the system according to this embodiment.

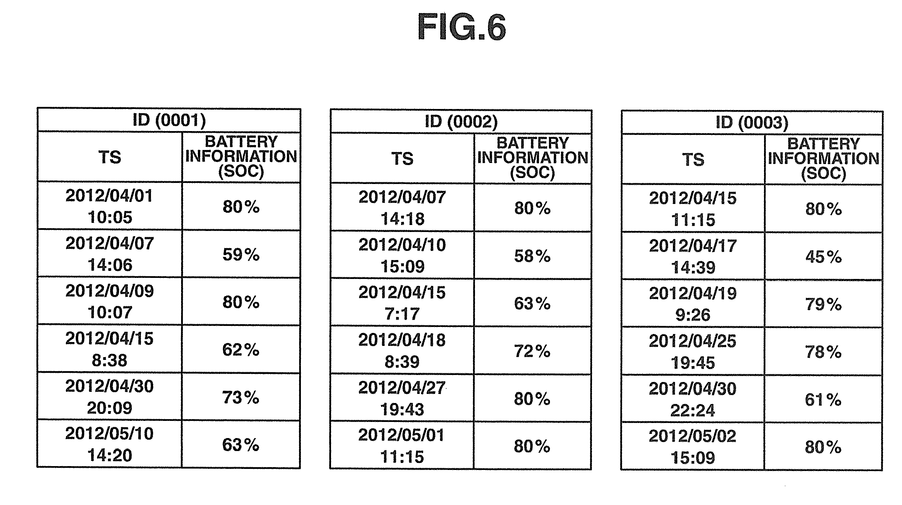

FIG. 6 is a concept view of data recorded in database 13. To facilitate the explanation, the following explanation uses, as an example of data managed by server 1, battery state information in the form of battery charge state (SOC: State of Charge). However, the data managed by server 1 may include battery state information other than SOC (for example, battery voltage, and battery full charge capacity), and information representing vehicle state (for example, travel distance and vehicle position).

Database 31 contains a recorded data set including a timestamp and SOC associated or paired with each other for each of the vehicle identification information item. The timestamp represents the time at which the SOC is measured. The battery controllers 201, 301 measures the battery's SOC by sensing the voltage of battery 26, 36 at the time of turn-on of a main switch for operating the vehicle A, B, for example. Therefore, the timestamp is the time of SOC measurement on the vehicle's side, and the time at which the voltage of battery 26, 36 is sensed.

Each vehicle measures SOC of the battery 26, 36 occasionally as required, from the time of delivery of the vehicle to a purchaser, thereby accumulates the SOC data and transmits the SOC data to the server. Therefore, server 1 holds an accumulation of SOC data items of each vehicle arranged in the chronological manner or in the manner of a time series from the time of the delivery.

Server 1 receives the battery information item (SOC) and the timestamp from each vehicle, and records the battery information item and timestamp in database 31 as the vehicle information, as shown in tables in FIG. 6. For example, in the case of the vehicle assigned with vehicle ID (0001), the vehicle is delivered on April 1, 2012, the vehicle main switch is turned on at 10:05, and the first measuring operation is performed with the result that SOC is 80%. The vehicle (ID0001) performs a second measurement on April 7, 2012 at 14:06, and the SOC is 59% in the second measurement. Furthermore, the most recent data set managed by the server for the vehicle (ID0001) is a set including a timestamp of May 10, 2013, 14:20 and SOC (63%). Similarly, as to the other vehicles, the SOC and the measurement time (TS) are recorded for each vehicle in the form of time series from the time of delivery of the vehicle.

Moreover, server 1 manages, as a server log, the timestamp of the most recent data item among the time series of the updated SOC data. For example, in the tables of FIG. 6, the server manages, as the server log, the timestamp of May 10, 2012, 14:20 among the date of vehicle (ID0001), the timestamp of May 01, 2012, 14: 20 among the date of vehicle (ID0002), and so on in the same manner for the other vehicles.

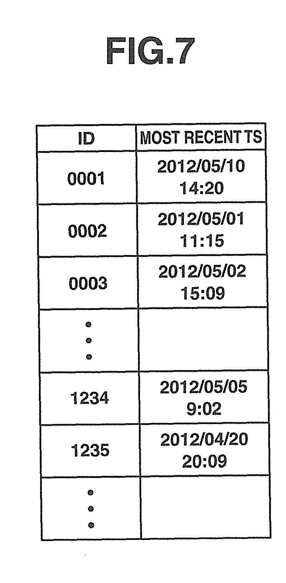

FIG. 7 is a concept view showing a table managed as the server log. With the table of FIG. 7, server 1 manages the timestamp of the most recent data managed by the server for the ID of each vehicle. For a vehicle (ID1234), for example, the SOC data is recorded up to May 05, 2012, 9:02, but more recent data is not transmitted to server 1 and not recorded in database 13 after that time instant.

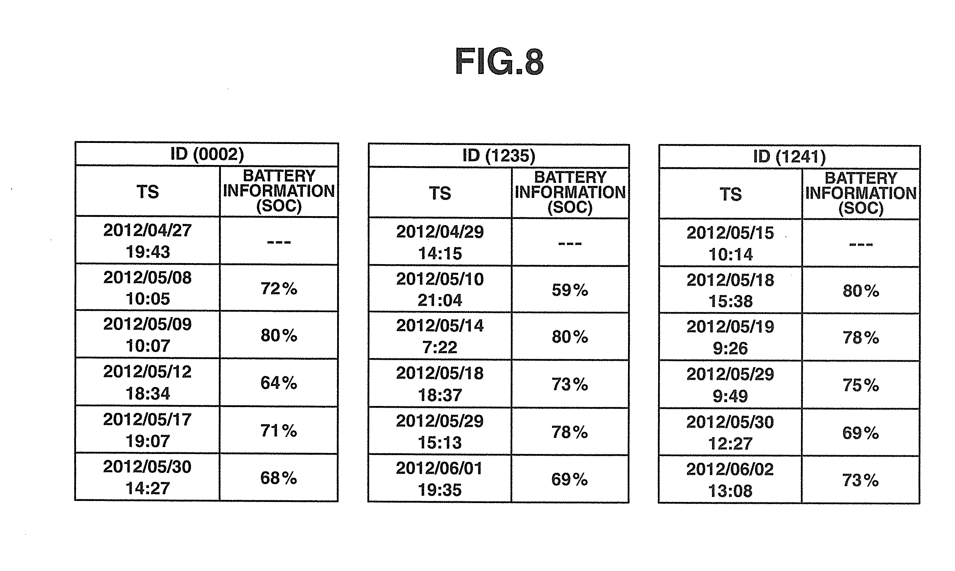

Following is explanation on data recorded in memory 25 or 35 on the vehicle's side. FIG. 8 is a concept view of data (vehicle information) stored in memory 25 or 35. Like the server's side, the following explanation uses, as an example of data stored in memory 25, battery state information in the form of battery charge state (SOC: State of Charge). However, the data stored in memory 25, 35 may include battery state information other than SOC (for example, battery voltage, and battery full charge capacity), and information representing vehicle state (for example, travel distance and vehicle position). The following explanation is directed to data in memory 25.

Data stored in memory includes the SOC data of the host vehicle and other vehicles in the form associating the SOC data with the timestamp like the database of server 1. The timestamp is a data item of the time at which the SOC is measured. Data of the other vehicles is obtained by the vehicle-to-vehicle communication.

Control section 21 performs a control operation not to record, in memory 25, data recorded in database 13 to reduce a data quantity of data stored in memory 25 whose memory capacity is small as compared to database 31. At the time of transmitting data recorded in memory 25 from vehicle A to server 1, the control section 21 deletes the data from memory 25 after the transmission of the data to server 1. Furthermore, at the time of communication between vehicle A and a further vehicle, if the data recorded in memory 25 by the communication with the further vehicle includes data already recorded in database 13, the control section 21 delete the data recorded in database 13, from memory 25. The control of communication between the server and the vehicles and the control of communication between vehicles will be explained later.

Among timestamps recorded in memory 25 for each ID, the oldest timestamp is recorded as the timestamp of the server log. In this example, to reduce the data quantity for the communication and the recording to memory 25, 35, the server log is recorded on the vehicle's side, too, so that each vehicle can recognize the data already recorded in database 13 and already managed by server 1.

For example, in the example shown in FIG. 8, among the timestamps of vehicle ID (0002), the timestamp of April 27, 2012, 19:43 is recorded as the timestamp of the server log. This timestamp is a timestamp currently recognized by the vehicle A's side, as the most recent timestamp recorded in server 1, though the managed timestamp may be older than the server log managed by the server. This timestamp is data to be updated not only by the communication with server 1, but also by the vehicle-to-vehicle communication.

The data item (SOC) corresponding to the timestamp of the server log in memory 25 is data already managed by server 1. Therefore, this data item need not be saved in memory 25 as shown in FIG. 8.

In the example of FIG. 8, the control section 21 considers that, as to data for the vehicle assigned with vehicle ID (0002), the data before April 27, 2012, 19:43 is data already managed by server 1, so that the data before April 27, 2012, 19:43 is not recorded in memory 25. Control section 21 manages the data of vehicle ID (0002) by recoding, in memory 25, SOC data and timestamps from May 1, 2012, 11:15 to May 30, 2012, 14:27.

Moreover, in some case, memory 25 does not store ID which is recorded in database 13, and hence the number of IDs in memory 25 may be smaller than the number of IDs recorded in database 13. In this example, server 1 manages all the data (SOC, timestamp) of vehicles connected by communication, and hence database 13 stores vehicle IDs of all the vehicles connected by communication with server 1. On the other hand, memory 25 of vehicle A stores vehicle IDs obtained by the vehicle-to-vehicle communication during travel of vehicle A, and hence the number of IDs recorded in memory 25 is smaller than the number of IDs managed by server 1.

In the example of FIG. 6 and FIG. 8, the data of vehicle ID (0001) and vehicle ID (0003) are recorded in database 13 on the server side, but the memory 25 of vehicle A have no records of data of vehicle ID (0001) and vehicle ID (0003).

Moreover, control section 21 manages the timestamps of SOC in memory 25 as the vehicle log for each of the vehicle IDs. The vehicle log is a log representing the measurement time of data (SOC) recorded in memory 25. The vehicle log contains at least the newest or most recent timestamp of the measurement time (representing a past time instant closest to the present). That is, memory 25 stores SOC of the measurement time shown in the vehicle log.

The vehicle log is updated at the timing of updating the records of memory 25, for example at the timing of updating the record data in memory 25 by the vehicle-to-vehicle communication. Moreover, the SOC data of the host vehicle is updated at the time of measurement of SOC of battery 26. Therefore, the vehicle log is updated at the time of SOC measurement of battery 26.

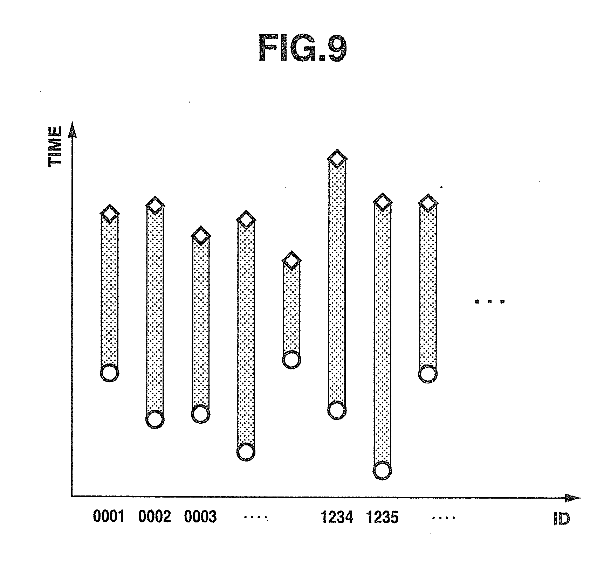

Next, FIGS. 9∼12 illustrate the communication control between server 1 and vehicles. In the following explanation, the control of communication between vehicle A and server 1 is treated. However, the control of communication between server 1 and other vehicles including vehicle B is performed in the same manner. In this example, data shown in the tables of FIG. 6 is stored in database 13 of server 1, and data shown in table of FIG. 8 is stored in memory 25 of vehicle A.

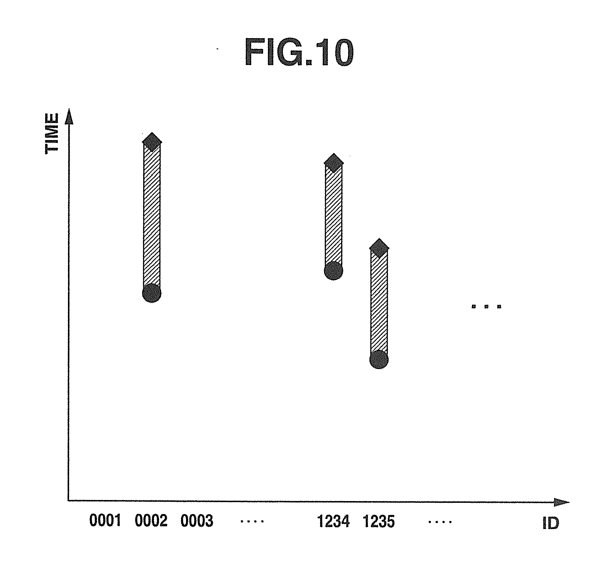

FIG. 9 and 10 are views for explaining data stored in database 13 and memory 25. FIG. 9 is a graph showing data recorded in database 13 for each ID in the form of time series. FIG. 10 is a graph showing data recorded in memory 25 for each ID in the form of time series.

As shown in FIG. 9, data in database 13 is accumulated, for each of the vehicle IDs managed by server 1, in the chronological order or in the form of time series of measured SOCs. In FIG. 9, the mark of a white circle or open circle represents the oldest timestamp among timestamps of SOC data items managed by server 1 for each vehicle ID, and corresponds to the measurement time of SOC just after the delivery of the vehicle. In Fig. 9, the mark of a white square represents the newest or most recent timestamp among timestamps of SOC data items managed by server 1 for each vehicle ID. The group of timestamps marked with the white square corresponds to the server log.

Thus, after the time of the timestamp marked with the white square for each vehicle ID, SOC data is not transmitted to server 1 though SOC may be measured in the vehicle of the vehicle ID.

As shown in FIG. 10, data is accumulated in memory 25 in the chronological order or in the form of time series of measured SOC data items, for each of the vehicle IDs including the ID of the host vehicle, and vehicle IDs of SOC data received by vehicle A. In FIG. 10, the mark of a black circle or filled circle represents the oldest timestamp among timestamps of SOC data items managed by control section 21 for each vehicle ID, and the timestamp marked with the black circuit is recognized by the vehicle A's side, as the newest timestamp recorded in server 1. In FIG. 10, the mark of a black square represents the newest or most recent timestamp among timestamps of SOC data items managed by control section 21 for each vehicle ID. At least, the group of timestamps marked with the black square corresponds to the vehicle log.

Thus, SOC data measured before the timestamp marked with the black circuit is already recorded in database 13. Moreover, SOC is not yet measured after the timestamp marked with the black square in the case of the host vehicle (vehicle A). In the case of other vehicles, after the time of the timestamp marked with the black square, SOC is not yet measured or not yet obtained by the communication with the other vehicles though SOC is already measured.

In an operation of communication between vehicle A and server 1, the control section 21 controls server communication section 24 and makes a communication link with communication section 12 of server 1. After the establishment of the communication link, control section 21 receives, with server communication section 24, the server log from server 1. Control section 21 compares IDs contained in the server log and IDs recorded in memory 25, and specifies or determines ID in memory 25 which is in agreement with ID of the server log.

In the example shown in FIGS. 9 and 10, among the IDs (0001, 0002, 0003, 1234, 1235 etc.) included in the server log, the IDs (0002, 1234, 1235) are in agreement with the respective IDs recorded in memory 25.

As to the IDs (0002, 1234, 1235) judged to be in agreement, the control section 21 compares the timestamp of the server log with the timestamp of the vehicle log which is the timestamp recorded in memory 25.

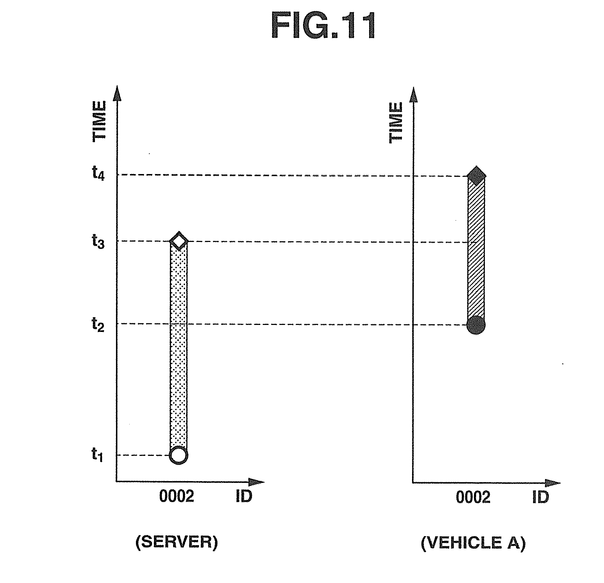

FIG. 11 shows, as an example, the relationship of the timestamps for vehicle ID (0002). FIG. 11 is a graphic view showing SOC data of ID (0002) managed by server 1 and SOC data of ID (0002) managed by vehicle A in the chronological manner. FIG. 11 shows the state of data just before the transmission of SOC data by communication with server 1.

In FIG. 11, an instant t1 represents the oldest timestamp (April 07, 2012, 14:18) of vehicle ID (0002) among the timestamps shown in FIG. 6. An instant t3 represents the newest timestamp (May 01, 2012, 14:20) of vehicle ID (0002) among the timestamps shown in FIG. 6, and instant t3 is the timestamp of the server log. An instant t2 represents the oldest timestamp (April 27, 2012, 19: 43) of vehicle ID (0002) among the timestamps shown in FIG. 8. An instant t4 represents the newest timestamp (May 30, 2012, 14:27) of vehicle ID (0002) among the timestamps shown in FIG. 8, and instant t4 is the newest timestamp of the vehicle log.

Among the SOC data recorded in vehicle A in relation to vehicle ID (0002), data older than instant t3 is data already recorded in database 13, and managed by server 1. On the other hand, data newer than instant t3 is data not yet recorded in database 13.

As to the IDs (0002, 1234, 1235) about which agreement is affirmed, the control section 21 determines or specifies timestamp(s) older than timestamp of the server log and timestamp(s) newer than the timestamp of the server log, from the timestamps recorded in memory 25. Then, control section 21 specifies the SOC data items corresponding to the timestamp or timestamps newer than the timestamp of the server log, from memory 25.

In the example of FIG. 11, control section 21 compares the timestamp (instant t3) of the server log with timestamps (from instant t2 to instant t4), specifies timestamps from instant t2 to instant t3, and timestamps from instant t3 to instant t4, and specifies SOC data items corresponding to the timestamps (t3∼t4) from memory 25.

Then, control section 21 transmits, to server 1, the SOC data items of the timestamps newer than the timestamp of the server log. After the transmission of the SOC data items of ID (0002) to server 1, the control section 21 deletes the transmitted SOC data items from memory 25.

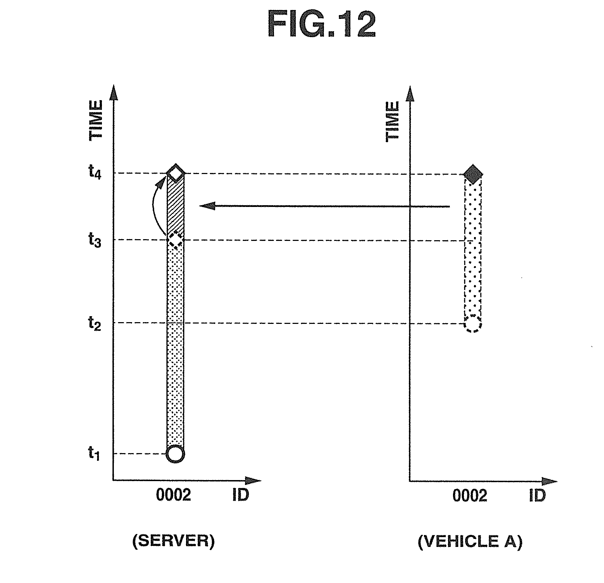

FIG. 12 is used for explaining data recorded in database 13 and memory 25 after the transmission of SOC data. FIG. 12 is a graphic view showing SOC data of ID (0002) managed by server 1 and SOC data of ID (0002) managed by vehicle A in the chronological manner, after the transmission of data.

Since the data items of the timestamps from instant t3 to instant t4 are transmitted from vehicle A to server 1, after the transmission, the SOC data items of the timestamps from instant t3 to instant t4 are recorded in database 13. Furthermore, the newest timestamp of vehicle ID (0002) is changed from instant t3 to instant t4. Therefore, the control section 11 of server 1 updates the timestamp of vehicle ID (0002) in the server log, to instant t4.

After the transmission to server 1, all the data recorded in memory 25 is managed by the server and not required to be transmitted from vehicle A or the other vehicles, to server 1 again. Therefore, control section 21 deletes the SOC data of ID (0002) from memory 25.

Moreover, in this example, at the time of deletion of SOC data of ID (0002), at least the newest timestamp recorded in memory 25 is updated and saved as the server log without being deleted. Therefore, in the case of the vehicle-to-vehicle communication between vehicle A and other vehicle, the other vehicle can grasp the newest timestamp of ID (0002) in server 1, from the server log transmitted from vehicle A. When, for example, the data for ID (0002) recorded in the memory of the other vehicle is older than the timestamp of the server log transmitted from vehicle A, the other vehicle is controlled to delete the older data without transmitting the older data from the other vehicle to server 1. Consequently, this system can reduce the quantity of data transmitted from the other vehicle to server 1, and delete redundant data from the memory.

Then, control section 21 compares the ID(s) contained in the server log with the ID(s) recorded in memory 25. If memory 25 holds ID(s) not contained in the server log, the control section 21 transmits the timestamp and SOC data of the ID(s) not contained in the server log. When an ID is not contained in the server log but recorded in memory 25, it is judged that memory 25 has the ID and data of a new vehicle not yet managed by server 1, and hence control section 21 transmits the said data to server 1. After the transmission of the data to server 1, control section 21 deletes the data transmitted to the server in the same manner as mentioned above.

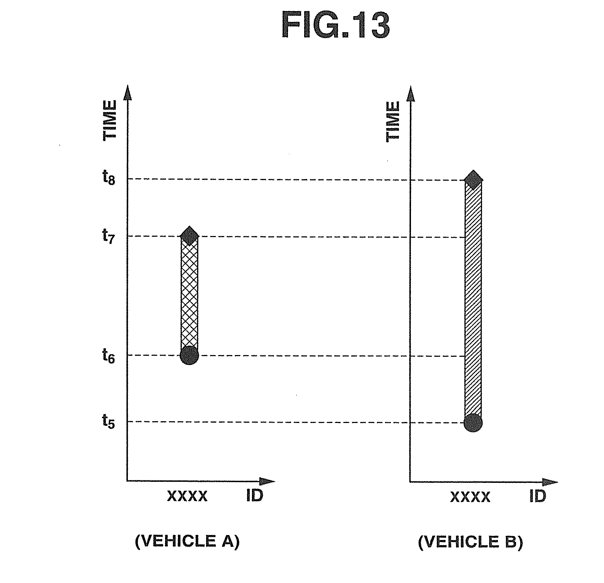

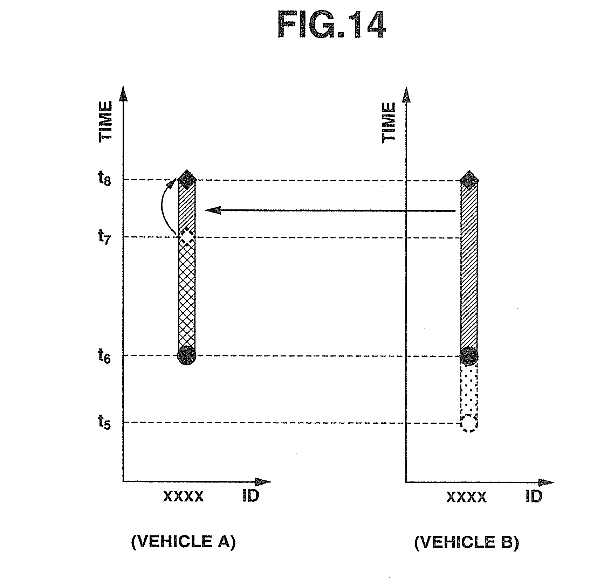

FIGS. 13 and 14 are views for explaining the communication control between vehicle A and vehicle B. Although the following explanation is directed to the communication control between vehicles A and B, the communication control between other vehicles is the same. A vehicle ID (XXXX) shown in FIG. 13 may be the ID of vehicle A or vehicle B or may be the ID of a vehicle other than vehicles A and B. The control of vehicle-to-vehicle communication of the following example is applicable to any of these cases.

FIG. 13 is a graphic view showing data recorded in memories 25 and 35 of vehicles A and B before communication between vehicles A and B. FIG. 13 shows data of vehicle ID (XXXX) recorded in database 13 in the chronological order for each ID.

In the example of FIG. 13, the data for vehicle ID (XXXX) recorded in memory 25 of vehicle A includes timestamps from the oldest timestamp (instant t5) to the newest timestamp (instant t8), and SOC data corresponding to these timestamps. The data for vehicle ID (XXXX) recorded in memory 35 of vehicle B includes timestamps from the oldest timestamp (instant t6) to the newest timestamp (instant t7), and SOC data corresponding to these timestamps. The timestamp (instant t5) is prior to the timestamp (instant t6). The timestamp (instant t8) is later than the timestamp (instant t7).

As to the data of vehicle ID (XXXX), the timestamp (instant t5) is managed as the server log in vehicle A, and the timestamp (instant t6) is managed as the server log in vehicle B. In FIG. 13, the marks of black circle and black square have the same meaning as in FIG. 10.

In the case of communication between vehicle A and vehicle B, control sections 21 and 31 establish a communication link therebetween by controlling the respective vehicle-to-vehicle communication sections 23 and 33. After the establishment of the communication link, control section 21 transmits the vehicle log and server log of memory 25 to vehicle B, and simultaneously receives the vehicle log and server log of memory 35 from vehicle B. Similarly, control section 31 transmits the vehicle log and server log of of vehicle B, and simultaneously receives the vehicle log and server log of vehicle A.

Control section 21 compares timestamp(s) recorded in memory 25 with the timestamps of the vehicle log and server log transmitted from vehicle B, for each of IDs in agreement.

The control of data transmission from vehicle A to vehicle B is performed in the following manner. Data is transmitted from vehicle A to vehicle B when the timestamp of the vehicle log of vehicle A is newer than the timestamp of the vehicle log of vehicle B. Control section 21 specifies or determines timestamp(s) newer than the timestamp of the vehicle log of vehicle B among timestamps recorded in memory 25. The SOC data of the specified timestamp(s) is data not recorded in memory 35 of vehicle B. Therefore, control section 21 transmits the said SOC data from vehicle A to vehicle B.

Control section 21 specifies or determines timestamp(s) older than the timestamp of the vehicle log of vehicle B among the timestamps recorded in memory 25. The SOC data of the specified timestamp(s) is data already recorded in vehicle A and vehicle B. Therefore, control section 21 does not transmit the said SOC data from vehicle A to vehicle. B.

The control of data reception from vehicle B to vehicle A is performed in the following manner. Data is received by vehicle A from vehicle B when the timestamp of the vehicle log of vehicle A is older than the timestamp of the vehicle log of vehicle B. Control section 21 specifies or determines timestamp(s) newer than the timestamp of the vehicle log of vehicle A among timestamps recorded in memory 35. The SOC data of the specified timestamp(s) is data not recorded in the memory of vehicle A. Therefore, control section 21 receives the said SOC data from vehicle B. The received data is recorded in memory 25 in the form associating the timestamp and SOC with each other.

The timestamp(s) and corresponding data to be received by vehicle A, that is the timestamp(s) and corresponding data to be transmitted from vehicle B may be specified on the vehicle B's side, or may be specified on the vehicle A's side by receiving the group of timestamps recorded in member 35 and comparing the received timestamps with the vehicle log of vehicle A.

In vehicle A, data is deleted from memory 25 in the following manner. Data in the memory of vehicle A is deleted when the server log of vehicle A is older than the server log of vehicle B. In this case, the newest timestamp for ID (XXXX) recognized by vehicle A as being the newest timestamp managed by server 1 is older than the newest timestamp actually managed by server 1, or, at least, older than the newest timestamp for ID (XXXX) recognized by vehicle B as being the newest timestamp managed by server 1. In this case, memory 25 contains data which is already managed by server 1. Therefore, control section 21 deletes the said data.

Control section 21 specifies timestamp(s) older than the timestamp of the server log of vehicle B among timestamps recorded in memory 25. The SOC data of the specified timestamp(s) is data already recorded in database 13 and managed by server 1. Therefore, control section 21 deletes the said SOC data from memory 25.

Following is explanation on the above-mentioned control in the example shown in FIGS. 13 and 14. FIG. 14 is a graphic view showing data recorded in memories 25 and 35 of vehicles A and B after the communication between vehicles A and B.

On the vehicle A's side, control section 21 compares the timestamp(s) in memory 25 with the server log and vehicle log of vehicle B, and thereby judges that the vehicle log of vehicle A is older than the vehicle log of vehicle B and the server log of vehicle A is newer than the server log of vehicle B. In this case, as to the data of vehicle ID (XXXX), the memory 35 of vehicle B contains SOC data of timestamp(s) newer than the timestamp of memory 25 of vehicle A, and further contains data which is already managed by server 1 and which is not required to be saved in the memory.

Control section 21 or 31 specifies timestamp(s) newer than instant t7 among the timestamps recorded in memory 35. Then, control section 21 receives SOC data of the specified timestamp(s) from vehicle B, and records, in memory 25, the received SOC data so as to correspond to the timestamps from instant t7 to instant t8, recorded in member 35.

Moreover, after the operation of recording the specified data in memory 25, the control section 21 updates the timestamp of ID (XXXX) from t7 to t8 in the vehicle log of vehicle A.

On the vehicle B's side, the control section 31 compares the timestamp(s) of memory 35 with the server log and vehicle log of vehicle A, and by so doing, specifies or determines that the vehicle log of vehicle B is newer than the vehicle log of vehicle A and the server log of vehicle B is older than the server log of vehicle A.

Control section 31 specifies timestamp(s) older than instant t6 among the timestamps recorded in memory 35. Then, control section 31 deletes the SOC data of the specified timestamp(s), from memory 35.

After the operation of deleting the specified data from memory 35, the control section 31 updates the timestamp of ID (XXXX) from t5 to t6, in the server log of vehicle B.

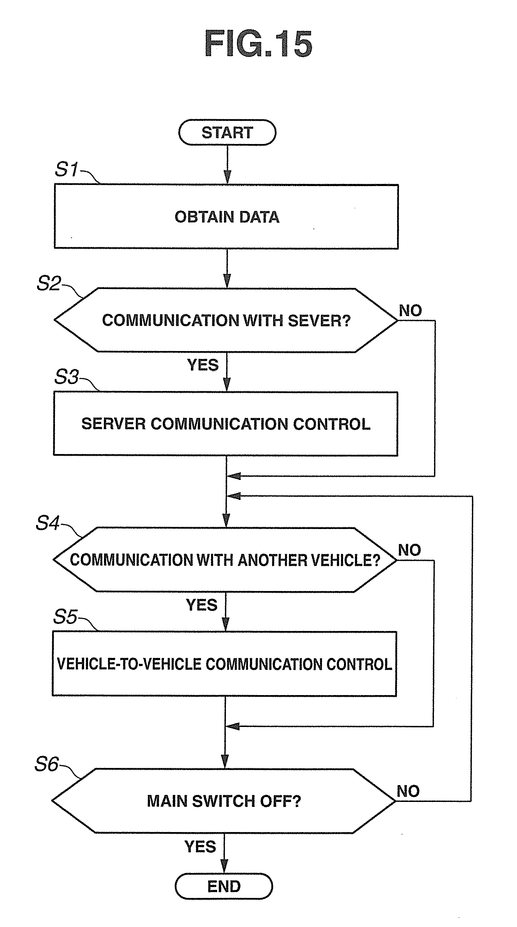

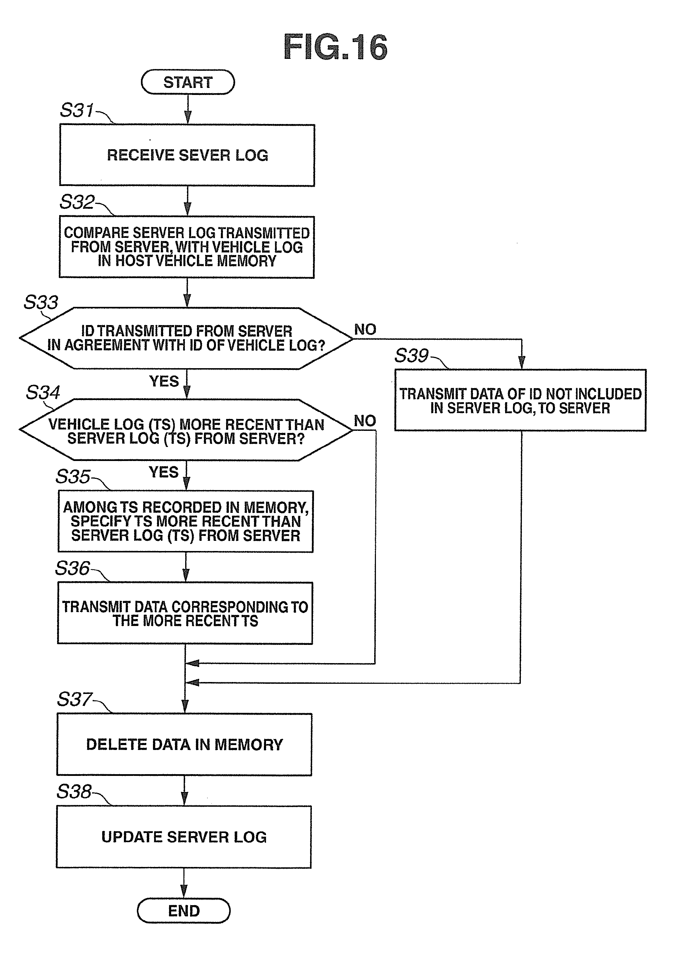

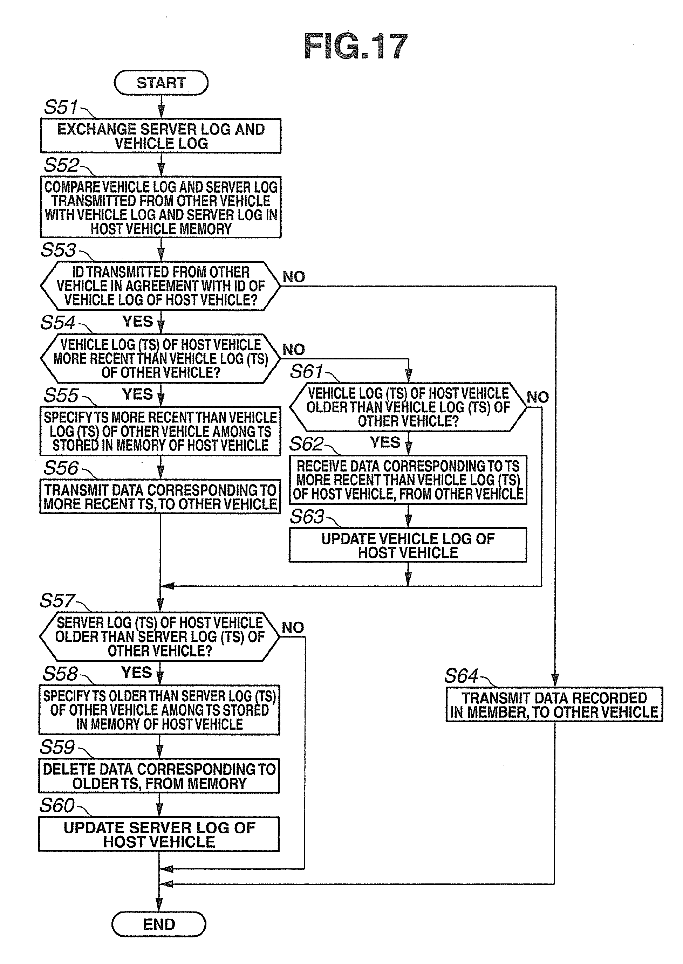

FIGS. 15∼17 are used for explaining the control process of control section 21. FIG. 15 is a flowchart showing the control process of control section 21. FIG. 16 is a flowchart showing a control process of a server communication control shown in FIG. 15. FIG. 17 is a flowchart showing a control process of a vehicle-to-vehicle communication control shown in FIG. 15.

At a step S1, the main switch is turned on, and the control section 21 obtains data representing the state of battery 26, by measuring the SOC of battery 26 from the sensed voltage of battery 26, with battery controller 201, and saving the time of the measurement and the measured SOC in memory 25.

At a step S2, the control section examines whether the communication with server 1 is possible or not. The examination of this step may be performed at the timing of obtaining SOC data, or may be performed periodically at a predetermined period, for example once a day, or at an arbitrary timing.

In the case of the communication being possible, at a step S3, the control section 21 performs a server communication control (step S3) with server 1. The control of step S3 is explained in detail, later.

When the communication is not possible at S2 or after the control operation of step S3, the control section examines, at a step S4, whether the communication with another vehicle is possible or not during a travel.

In the case of the communication being possible with another vehicle, the control section performs a vehicle-to-vehicle communication control with the other vehicle, at a step S5. The control of step S5 is explained in detail, later.

In the case of the communication being not possible at step S5, the control section determines whether the main switch is turned off or not. When the main switch remains in the on state, the control section returns to step S4.

In the case of the server communication control of step S3, the control section performs the control process of FIG. 16. In the control process of FIG. 16, a step S33 and subsequent steps are performed for each of IDs recorded in memory 25.

At a step S31, control section 21 receives the server log from server 1. At a step S32, control section 21 compares the server log with the vehicle log stored in memory 25. Then, at a step S33, control section 21 examines whether the ID (ID of the server log) transmitted from server 1 and the ID of the vehicle log of vehicle A are in agreement with each other.

When the IDs are in agreement, as to the ID in agreement, the control section 21 examines whether the timestamp of the vehicle log is newer than the timestamp of the server log or not (step S34). When the timestamp of the vehicle log is newer than the timestamp of the server log, the control section specifies, at a step S35, timestamp(s) newer than the timestamp of the server log, among the timestamps recorded in memory 25.

At a step S36, control section 21 transmits, to server 1, the data (SOC) corresponding to the specified newer timestamp(s). Then, at a step S37, the control section deletes the data (SOC) stored in member 25. At a step S38, the control section sets, as the updated timestamp of the server log managed by vehicle A, the newest timestamp among the timestamps corresponding to the data transmitted at step S36, and terminates the server communication control.

When the timestamp of the vehicle log is not newer than the timestamp of the server log in the examination of step S34, all the data (SOC) stored in memory 25 for the ID in agreement is data already recorded in database 13. Therefore, the control section proceeds to step S37, and deletes the said data recorded in memory 25. At step S38, the control section sets, as the updated timestamp of the server log managed by vehicle A, the timestamp of the server log received at step S31, and terminates the server communication control.

When the IDs are not in agreement in the judgment of step S33, memory 25 stores the data of a new vehicle not yet managed by server 1. Therefore, at a step S39, the control section 21 transmits data (SOC, timestamp) of that ID stored in memory 25, to server 1, and then returns to step S37. At step S38, the control section sets, as the updated timestamp of the server log managed by vehicle A, the newest timestamp among the timestamps corresponding to the data transmitted at step S39, and terminates the server communication control.

In the case of the vehicle-to-vehicle communication control of step S5, the control section performs the control process of FIG. 17. In the control process of FIG. 17, a step S53 and subsequent steps are performed for each of IDs recorded in memory 25.

At a step S51, vehicle A exchanges the server log and vehicle log with another vehicle as the communication partner. At a step S52, control section 21 compares the server log and vehicle log transmitted from the other vehicle acting as the communication partner, with the server log and the vehicle log of its own vehicle, that is, the host vehicle. At step S53, control section 21 examines whether ID transmitted from the other vehicle with ID of the vehicle log of the host vehicle.

When the IDs are in agreement, as to the ID in agreement, the control section 21 examines, at a step S54, whether the timestamp of the vehicle log of vehicle A is newer than the timestamp of the vehicle log of the other vehicle. When the timestamp of the vehicle log of vehicle A is newer than the timestamp of the vehicle log of the other vehicle, the memory 25 stores data (SOC) of the ID in agreement which is not recorded in the memory of the other vehicle.

Among the timestamps recorded in the memory, the control section specifies timestamp(s) newer than the timestamp of the vehicle log of the other vehicle (S55). At a step S56, the control section transmits, to the other vehicle, the data (SOC) corresponding to the specified timestamp(s).

At a step S57, control section 21 examines whether the timestamp of the server log of vehicle A is older than the timestamp of the server log of the other vehicle or not. When the timestamp of the server log of vehicle A is older than the timestamp of the server log of the other vehicle, the control section specifies, at a step S58, timestamp(s) older than the time stamp of the server log of the other vehicle, among the timestamps recorded in memory 25.

At a step S59, the control section 21 deletes the data (SOC) corresponding to the specified older timestamp(s), from memory 25. Then, at a step S60, the control section updates the server log by changing the timestamp recorded as the server log, to the timestamp of the server log received from the other vehicle, and terminates the vehicle-to-vehicle communication control.

When the timestamp of the server log of vehicle A is not older than the timestamp of the server log of the other vehicle in the examination of step S57, the data recorded in memory 25 is data not managed by server 1 only in the recognition in vehicle A and the other vehicle. Therefore, the control section terminates the vehicle-to-vehicle communication control without deleting the said data.

When the timestamp of the vehicle log of vehicle A is not newer than the timestamp of the vehicle log of the other vehicle in the examination of step S54, the control section 21 examines, at a step S61, whether the timestamp of the vehicle log of vehicle A is older than the timestamp of the vehicle log of the other vehicle or not.

When the timestamp of the vehicle log of vehicle A is older than the timestamp of the vehicle log of the other vehicle, the control section receives, from the other vehicle, data (SOC) which corresponds to timestamp(s) newer than the timestamp of the vehicle log of vehicle A and which is stored in the memory of the other vehicle (step S62). At a step S63, the control section sets, as the updated timestamp of the vehicle log, the newest timestamp among the timestamps contained in the data received at S62, and proceeds to step S57.

When the timestamp of the vehicle log of vehicle A is in agreement with the timestamp of the vehicle log of the other vehicle in the examination of step S61, the control section proceeds to step S57 without transmitting and receiving data for the ID in agreement.

When the IDs are not in agreement in the judgment of step S53, at a step S64, the control section 21 transmits data of the said ID stored in memory 25, to the other vehicle, and terminates the vehicle-to-vehicle communication control.

As mentioned above, in this example, the vehicle information includes state information representing a battery state of a battery or the like and a timestamp of the said state information; and the apparatus compares the timestamp of data received by the vehicle-to-vehicle communication or the server communication, with the timestamp recorded in the memory 25, 35, specifies or determines a more recent or newer timestamp from the result of comparison, and transmits, to one of the other vehicle and the server, the data (SOC etc.) corresponding to the specified more recent timestamp. With this configuration, the apparatus can control the communication to prevent repetitive or redundant transmission to the other vehicle or the server, of the data already recorded in the memory of the other vehicle on in the server, so that the apparatus can reduce the quantity of data to be transmitted and received. Moreover, the apparatus can specify new data by transmitting and receiving data of the timestamp which is smaller in data quantity than data such as SOC, and transmit the new data to the other vehicle or the server. Therefore, it is possible to reduce the quantity of data to be transmitted and received.

Moreover, in this example, the apparatus deletes, from the memory 25, 35, data representing the state information such as SOC contained in the data transmitted to the server. Therefore, the apparatus can utilize the memory capacity of the memory effectively.

Furthermore, in this example, the timestamp includes a timestamp managed as the server log and a timestamp recorded in the memory 25, 35; and the control section 21 specifies an older timestamp which is a timestamp of the other vehicle in the memory 25, 35 and which is older than the timestamp of the server log managed by the other vehicle, and deletes data such as SOC corresponding to the specified timestamp, from the memory 25, 35. Therefore, when the recording in the memory 25, 35, of the data of the other vehicle already managed by server 1 is confirmed by the vehicle-to-vehicle communication, the apparatus can delete the said data from the memory 25, 35. Consequently, the apparatus can utilize the memory capacity of the memory effectively. Moreover, since the said data is not transmitted or received by the vehicle-to-vehicle communication and the server communication after the deletion, it is possible to reduce the quantity of data handled in the communication.

Moreover, in this example, the control section 21 specifies a timestamp which is a timestamp of the host vehicle in the memory 25, 35 and which is older than the timestamp of the server log managed by the other vehicle, and deletes data such as SOC corresponding to the specified timestamp, from the memory 25, 35. Therefore, when the recording in the memory 25, 35, of the data of the host vehicle already managed by server 1 is confirmed by the vehicle-to-vehicle communication, the apparatus can delete the said data from the memory 25, 35. Consequently, the apparatus can utilize the memory capacity of the memory effectively. Moreover, since the said data is not transmitted or received by the vehicle-to-vehicle communication and the server communication after the deletion, it is possible to reduce the quantity of data handled in the communication.

Moreover, in this example, the timestamp includes a received timestamp (timestamp recorded in the memory of the other vehicle) received from the other vehicle by the vehicle-to-vehicle communication and a recorded timestamp recorded in the memory 25, 35 of the host vehicle; and the control section 21 specifies a newer received timestamp which is one of the received timestamps and which is more recent than the recorded timestamp recorded in the memory 25, 35 of the host vehicle, receives the data such as SOC corresponding to the specified newer received timestamp. Therefore, the host vehicle can receive data by specifying data not recorded in the memory of the host vehicle, so that it is possible to reduce the quantity of data handled at the time of communication.

Moreover, in the information providing system of this example, the control section 11 of server 1 transmits a most recent timestamp (server timestamp) among timestamps recorded in the database 13 and ID, to vehicle A, B, by the vehicle communication device. Therefore, the vehicle's side receiving the said timestamp and ID can specify data to be transmitted to the server, so that it is possible to reduce the quantity of data handled at the time of communication.

The timing of update of the vehicle log is not limited to the time of receiving new data from another vehicle and recording the new data in memory 25, 35. As to the timestamp of the vehicle log of the host vehicle, the update may be performed at the time of measurement of the battery 25, 35 of the host vehicle.

The above-mentioned communication section 12 corresponds to "vehicle communication means" in the present invention, and the timestamp of the server log corresponds to "server timestamp" in the present invention.

## Claims

1. A vehicle information providing apparatus comprising:
a vehicle-to-vehicle communication means to transmit and receive vehicle information by wireless communication with an other vehicle;
a memory to store vehicle information of a host vehicle and vehicle information of the other vehicle received by the vehicle-to-vehicle communication means; and
a server communication means to transmit the vehicle information of the host vehicle and the vehicle information of the other vehicle stored in the memory, to a server.

2. The vehicle information providing apparatus as claimed in Claim 1, wherein the information providing apparatus further comprises a control means to control the vehicle-to-vehicle communication means and the server communication means, and
the control means is configured to transmit or receive the vehicle information of the host vehicle to and from the other vehicle by the vehicle-to-vehicle communication means when the host vehicle is outside a communication area where the host vehicle is able to perform communication by the server communication means.

3. The vehicle information providing apparatus as claimed in Claim 1 or 2, wherein the vehicle information comprises battery information representing a state of a battery provided in the vehicle, driving information representing a driving state of the vehicle, and identification information representing information identifying the vehicle.

4. The vehicle information providing apparatus as claimed in Claim 3, wherein the battery information includes at least one of a voltage of the battery, a current of the battery and a temperature of the battery.

5. The vehicle information providing apparatus as claimed in Claim 3 or 4, wherein the driving information includes at least one of a position of the vehicle, a vehicle speed of the vehicle, a starting time instant of the vehicle and a travel distance of the vehicle.

6. The vehicle information providing apparatus as claimed in one of Claims 1∼5, wherein the information providing apparatus further comprises a control means to control the vehicle-to-vehicle communication means and the server communication means, and
the control means is configured to store a communication log of communication by the vehicle-to-vehicle communication means or the server communication means.

7. The vehicle information providing apparatus as claimed in one of Claims 1∼6, wherein the server communication means is configured to receive server management information managed by the server.

8. The vehicle information providing apparatus as claimed in Claim 7, wherein the server management information comprises information on a location of a charge site to charge a battery provided in the vehicle.

9. The vehicle information providing apparatus as claimed in one of Claims 1∼8, wherein the server communication means is configured to communicate with the server when the host vehicle enters a service area of a relay station for communication with the server.

10. The vehicle information providing apparatus as claimed in one of Claims 1∼9, wherein the server communication means communicates with the server through a network of charge apparatus to charge a battery provided in the vehicle.

11. The vehicle information providing apparatus as claimed in one of Claims 1∼10, wherein the vehicle information providing apparatus further comprises a control means to control the memory; and
the control means has a function not to store vehicle information of the other vehicle when a total data quantity of a data quantity of the vehicle information of the other vehicle and a data quantity of data recorded in the memory is greater than a recordable limit capacity of the memory.

12. The vehicle information providing apparatus as claimed in one of Claims 1∼11, wherein the vehicle information providing apparatus further comprises a control means to control the memory; and
the control means has a function to delete an information item which is included in vehicle information recorded in the memory and which is oldest in update time in the vehicle information of the other vehicle when a total data quantity of a data quantity of the vehicle information of the other vehicle and a data quantity of data recorded in the memory is greater than a recordable limit capacity of the memory.

13. The vehicle information providing apparatus as claimed in one of Claims 1 ∼ 12, wherein the vehicle information providing apparatus further comprises a communication battery to supply electric power to the server communication means at a time of stoppage of the host vehicle, and thereby to enable the server communication means to communicate with the server.

14. The vehicle information providing apparatus as claimed on one of Claims 1∼13, wherein the vehicle information providing apparatus further comprises a control means to control the vehicle-to-vehicle communication means and the server communication means;
the vehicle information includes state information representing one of a battery state of a battery provided in the vehicle and a vehicle state of the vehicle, and a timestamp representing a measurement time of the state information; and
the control means is configured
to compare the timestamp contained in the vehicle information received by at least one of the vehicle-to-vehicle communication means and the server communication means, with the timestamp contained in the vehicle information recorded in the memory,
to specify a more recent timestamp from a result of comparison between the timestamps, and
to transmit, to one of the other vehicle and the server, the state information of the more recent timestamp specified from the result of the comparison.

15. The vehicle information providing apparatus as claimed in Claim 14, wherein the control means has a function to delete, from the memory, the state information contained in the vehicle information transmitted to the server.

16. The vehicle information providing apparatus as claimed in Claim 14 or 15, wherein the timestamp includes a server timestamp managed by the server and a record timestamp recorded in the memory; and
the control means is configured
to compare the server timestamp of the other vehicle received by the vehicle-to-vehicle communication means, with the record timestamp corresponding to the other vehicle;
to specify an older record timestamp which is older than the server timestamp, from a result of the comparison, and
to delete the state information of the older record timestamp, from the memory.

17. The vehicle information providing apparatus as claimed in Claim 14 or 15, wherein the timestamp includes a server timestamp managed by the server and a record timestamp recorded in the memory; and
the control means is configured
to compare the server timestamp of the host vehicle received by the vehicle-to-vehicle communication means, with the record timestamp corresponding to the host vehicle;
to specify an older record timestamp which is older than the server timestamp, from a result of the comparison, and
to delete the state information of the older record timestamp specified from the result of the comparison, from the memory.

18. The vehicle information providing apparatus as claimed in Claim 14 or 15, wherein the timestamp includes a received timestamp of the other vehicle received by the vehicle-to-vehicle communication means and a record timestamp which corresponds to the other vehicle and which is recorded in the memory; and
the control means is configured
to compare the received timestamp with the record timestamp;
to specify a newer received timestamp which is more recent than the record timestamp, from a result of the comparison,
to receive the state information of the newer received timestamp, and
to record, in the memory, the received state information in a form corresponding to the newer received timestamp.

19. A vehicle information management system for managing the vehicle information providing apparatus as claimed in one of Claims 14∼18, wherein the server comprises:
a database to record the vehicle information transmitted by the server communication means, in a form associating the state information, the timestamp and a vehicle identification information item, for each of a plurality of vehicles;
a vehicle communication means to transmit information recorded in the database, to the vehicles; and
a controller to control the database and the vehicle communication means; and
the controller has a function to transmit a most recent timestamp among timestamps recorded in the database and the identification information item corresponding to the most recent timestamp, to the vehicle, by the vehicle communication means.

## Amended claims

### Amended claims under Art. 19.1 PCT

**1.** A vehicle information providing apparatus comprising:
a vehicle-to-vehicle communication means to transmit and receive vehicle information by wireless communication with an other vehicle;
a memory to store vehicle information of a host vehicle and vehicle information of the other vehicle received by the vehicle-to-vehicle communication means; and
a server communication means to transmit the vehicle information of the host vehicle and the vehicle information of the other vehicle stored in the memory, to a server;
wherein the vehicle information includes battery information representing a state of a battery provided in the vehicle, and identification information representing information identifying the vehicle.

**2.** The vehicle information providing apparatus as claimed in Claim 1, wherein the information providing apparatus further comprises a control means to control the vehicle-to-vehicle communication means and the server communication means, and
the control means is configured to transmit or receive the vehicle information of the host vehicle to and from the other vehicle by the vehicle-to-vehicle communication means when the host vehicle is outside a communication area where the host vehicle is able to perform communication by the server communication means.

**3.** The vehicle information providing apparatus as claimed in Claim 1 or 2, wherein the vehicle information further comprises driving information representing a driving state of the vehicle.

**4.** The vehicle information providing apparatus as claimed in Claim 3, wherein the battery information includes at least one of a voltage of the battery, a current of the battery and a temperature of the battery.

**5.** The vehicle information providing apparatus as claimed in Claim 3 or 4, wherein the driving information includes at least one of a position of the vehicle, a vehicle speed of the vehicle, a starting time instant of the vehicle and a travel distance of the vehicle.

**6.** The vehicle information providing apparatus as claimed in one of Claims 1∼5, wherein the information providing apparatus further comprises a control means to control the vehicle-to-vehicle communication means and the server communication means, and
the control means is configured to store a communication log of communication by the vehicle-to-vehicle communication means or the server communication means.

**7.** The vehicle information providing apparatus as claimed in one of Claims 1∼6, wherein the server communication means is configured to receive server management information managed by the server.

**8.** A vehicle information providing apparatus comprising:
a vehicle-to-vehicle communication means to transmit and receive vehicle information by wireless communication with an other vehicle;
a memory to store vehicle information of a host vehicle and vehicle information of the other vehicle received by the vehicle-to-vehicle communication means; and
a server communication means to transmit the vehicle information of the host vehicle and the vehicle information of the other vehicle stored in the memory, to a server;
wherein the server communication means is configured to receive server management information managed by the server; and
the server management information comprises information on a location of a charge site to charge a battery provided in the vehicle.

**9.** The vehicle information providing apparatus as claimed in one of Claims 1∼8, wherein the server communication means is configured to communicate with the server when the host vehicle enters a service area of a relay station for communication with the server.

**10.** A vehicle information providing apparatus comprising:
a vehicle-to-vehicle communication means to transmit and receive vehicle information by wireless communication with an other vehicle;
a memory to store vehicle information of a host vehicle and vehicle information of the other vehicle received by the vehicle-to-vehicle communication means; and
a server communication means to transmit the vehicle information of the host vehicle and the vehicle information of the other vehicle stored in the memory, to a server;
wherein the server communication means communicates with the server through a network of charge apparatus to charge a battery provided in the vehicle.

**11.** The vehicle information providing apparatus as claimed in one of Claims 1∼10, wherein the vehicle information providing apparatus further comprises a control means to control the memory; and
the control means has a function not to store vehicle information of the other vehicle when a total data quantity of a data quantity of the vehicle information of the other vehicle and a data quantity of data recorded in the memory is greater than a recordable limit capacity of the memory.

**12.** The vehicle information providing apparatus as claimed in one of Claims 1∼11, wherein the vehicle information providing apparatus further comprises a control means to control the memory; and
the control means has a function to delete an information item which is included in vehicle information recorded in the memory and which is oldest in update time in the vehicle information of the other vehicle when a total data quantity of a data quantity of the vehicle information of the other vehicle and a data quantity of data recorded in the memory is greater than a recordable limit capacity of the memory.

**13.** The vehicle information providing apparatus as claimed in one of Claims 1∼12, wherein the vehicle information providing apparatus further comprises a communication battery to supply electric power to the server communication means at a time of stoppage of the host vehicle, and thereby to enable the server communication means to communicate with the server.

**14.** A vehicle information providing apparatus comprising:
a vehicle-to-vehicle communication means to transmit and receive vehicle information by wireless communication with an other vehicle;
a memory to store vehicle information of a host vehicle and vehicle information of the other vehicle received by the vehicle-to-vehicle communication means;
a server communication means to transmit the vehicle information of the host vehicle and the vehicle information of the other vehicle stored in the memory, to a server; and
a control means to control the vehicle-to-vehicle communication means and the server communication means;
wherein the vehicle information includes state information representing one of a battery state of a battery provided in the vehicle and a vehicle state of the vehicle, and a timestamp representing a measurement time of the state information; and
the control means is configured
to compare the timestamp contained in the vehicle information received by at least one of the vehicle-to-vehicle communication means and the server communication means, with the timestamp contained in the vehicle information recorded in the memory,
to specify a more recent timestamp from a result of comparison between the timestamps, and
to transmit, to one of the other vehicle and the server, the state information of the more recent timestamp specified from the result of the comparison.

**15.** The vehicle information providing apparatus as claimed in Claim 14, wherein the control means has a function to delete, from the memory, the state information contained in the vehicle information transmitted to the server.

**16.** The vehicle information providing apparatus as claimed in Claim 14 or 15, wherein the timestamp includes a server timestamp managed by the server and a record timestamp recorded in the memory; and
the control means is configured
to compare the server timestamp of the other vehicle received by the vehicle-to-vehicle communication means, with the record timestamp corresponding to the other vehicle;
to specify an older record timestamp which is older than the server timestamp, from a result of the comparison, and
to delete the state information of the older record timestamp, from the memory.

**17.** The vehicle information providing apparatus as claimed in Claim 14 or 15, wherein the timestamp includes a server timestamp managed by the server and a record timestamp recorded in the memory; and
the control means is configured
to compare the server timestamp of the host vehicle received by the vehicle-to-vehicle communication means, with the record timestamp corresponding to the host vehicle;
to specify an older record timestamp which is older than the server timestamp, from a result of the comparison, and
to delete the state information of the older record timestamp specified from the result of the comparison, from the memory.

**18.** The vehicle information providing apparatus as claimed in Claim 14 or 15, wherein the timestamp includes a received timestamp of the other vehicle received by the vehicle-to-vehicle communication means and a record timestamp which corresponds to the other vehicle and which is recorded in the memory; and
the control means is configured
to compare the received timestamp with the record timestamp;
to specify a newer received timestamp which is more recent than the record timestamp, from a result of the comparison,
to receive the state information of the newer received timestamp, and
to record, in the memory, the received state information in a form corresponding to the newer received timestamp.

**19.** A vehicle information management system for managing the vehicle information providing apparatus as claimed in one of Claims 14∼18, wherein the server comprises:
a database to record the vehicle information transmitted by the server communication means, in a form associating the state information, the timestamp and a vehicle identification information item, for each of a plurality of vehicles;
a vehicle communication means to transmit information recorded in the database, to the vehicles; and
a controller to control the database and the vehicle communication means; and
the controller has a function to transmit a most recent timestamp among timestamps recorded in the database and the identification information item corresponding to the most recent timestamp, to the vehicle, by the vehicle communication means.
